# EUROPÄISCHE PATENTANMELDUNG

(11) **EP 1 167 316 A2**
(43) Veröffentlichungstag der Anmeldung: **02.01.2002**
(21) Anmeldenummer: 01115154.5
(22) Anmeldetag: 22.06.2001
(51) Int. Cl.: C04B 28/00, C04B 18/24

(54) **Bodenschüttmaterial**

(30) Priorität: 29.06.2000 AT 11162000
(71) Anmelder: Loss, Johann, 6900 Bregenz (AT); PÖZ Parkett und ökologischer Wohnbedarf Handels- und Beratungs GmbH, 6850 Dornbirn (DE)
(72) Erfinder: Loss, Johann, 6900 Bregenz (AT)
(74) Vertreter: Hefel, Herbert, Dipl.-Ing.

(57) **Zusammenfassung**

Ein Bodenschüttmaterial, insbesondere zur Erstellung einer begehbaren Bodenschüttung, besteht aus einem Gemisch, welches Lehm und/oder Ton in ungebrannter Form sowie pflanzliche Faserstoffe auf Holzbasis enthält und welches durch Verquetschen zumindest teilweise in der Form von plättchenförmigen Teilchen (18) vorliegt.

## Beschreibung

Die Erfindung betrifft ein Bodenschüttmaterial, insbesondere zur Erstellung einer begehbaren Bodenschüttung.

Weiters betrifft die Erfindung ein Verfahren zur Herstellung eines derartigen Bodenschüttmaterials.

Bodenschüttungen werden von einem Bodenschüttmaterial aus losen Teilchen gebildet, die chemisch nicht miteinander gebunden sind. Für solche Bodenschüttungen wurden unterschiedliche Materialien vorgeschlagen und eingesetzt. Meist haben diese Materialien den Nachteil, daß eine daraus hergestellte Bodenschüttung nicht begehbar ist, da die Materialien beim Begehen ausweichen bzw. verdrängt werden. Zur Herstellung einer begehbaren Bodenschüttung ist bereits ein Bodenschüttmaterial aus Holz bekannt, welches aus aufgeschnittenen Holzpellets besteht. Nach einer Verdichtung der Bodenschüttung, beispielsweise mit einem Handstampfer, ist die Fläche begehbar und auf der Schüttung kann sofort weitergearbeitet werden.

Aufgabe der Erfindung ist es, ein neuartiges Bodenschüttmaterial bereitzustellen, welches sich insbesondere auch zur Erstellung einer begehbaren Bodenschüttung eignet, das einfach in großen Mengen herstellbar ist sowie kostengünstig und umweltfreundlich ist. Erfindungsgemäß gelingt dies dadurch, daß das Bodenschüttmaterial aus einem Gemisch besteht, welches Lehm und/oder Ton in ungebrannter Form sowie pflanzliche Faserstoffe auf Holzbasis enthält und welches durch Verquetschen zumindest teilweise in der Form von plättchenförmigen Teilchen vorliegt.

Ein erfindungsgemäßes Verfahren zur Herstellung eines derartigen Bodenschüttmaterials ist dadurch gekennzeichnet, daß Lehm und/oder Ton mit pflanzlichen Faserstoffen auf Holzbasis in Form von Sägemehl, Sägespänen od. dgl. vermischt wird und die Mischung durch eine Walzenquetsche geführt wird.

Das erfindungsgemäße Bodenschüttmaterial ist schnell verarbeitbar, nach dem Verdichten, beispielsweise mit einem Handstampfer, stabil trittfest und begehbar, weist gute schalltechnische Eigenschaften auf und ist nicht brennbar.

Zur Herstellung des erfindungsgemäßen Bodenschüttmaterials eignet sich eine herkömmliche Ziegelherstellungsanlage. Solche Ziegelherstellungsanlagen weisen Einrichtungen zur Lehmaufbereitung auf, in denen der Lehm verkleinert, vermengt und homogenisiert wird. Es sind auch Dosieranlagen vorhanden, um dem Lehm Zusatzstoffe zuzumischen. Dies können beispielsweise brennbare Zusatzstoffe sein, die beim Brennen der Ziegel herausgebrannt werden, so daß der Ziegel poröser wird.

Weitere Vorteile und Einzelheiten der Erfindung werden im folgenden anhand der beiliegenden Zeichnung erläutert. In dieser zeigen:

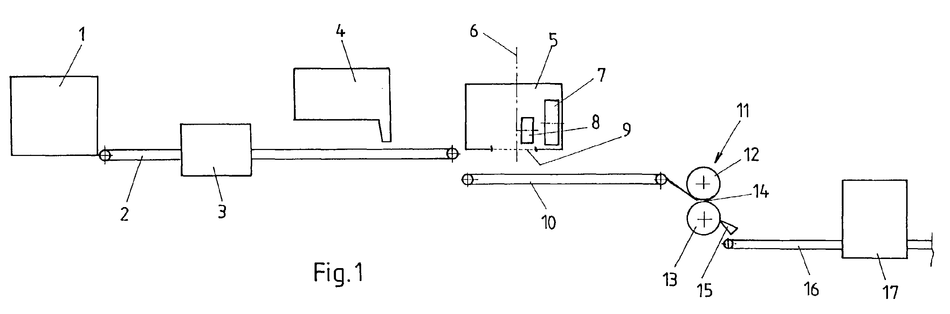

- Fig. 1: eine schematische Darstellung der Arbeitsstationen zur Herstellung eines erfindungsgemäßen Bodenschüttmaterials;
- Fig. 2: eine schematische Darstellung des erfindungsgemäßen Bodenschüttmaterials mit den plättchenförmigen Teilen in Draufsicht;
- Fig. 3: eine schematische, dreidimensionale Darstellung eines plättchenförmigen Teils in vergrößertem Maßstab;
- Fig. 4: und Fig. 5 schematische Querschnitte von Bodenaufbauten unter Verwendung des erfindungsgemäßen Bodenschüttmaterials.

Lehm wird aus einem Lehmvorratsbehälter 1 beispielsweise über ein Förderband 2 abtransportiert. In der Vorrichtung 3 kann eine Vorverkleinerung des Lehms erfolgen. Wenn hier und im folgenden von Lehm gesprochen wird, ist hiermit ein Lehm oder ein Ton oder ein Gemisch hiervon gemeint. Es kann dies ein Lehm oder Ton sein, wie er bei der Ziegelherstellung üblicherweise verwendet wird.

Von der Dosieranlage 4 werden Sägemehl bzw. Sägespäne zudosiert, so daß insgesamt 40 bis 85 Volumsprozent, vorzugsweise 55 bis 75 Volumsprozent Lehm und 15 bis 80 Volumsprozent, vorzugsweise 15 bis 60 Volumsprozent, nochmals vorzugsweise 25 bis 45 Volumsprozent Sägemehl bzw. Sägespäne vorliegen. Diese Materialien werden anschließend zur innigen Vermischung und Vorverkleinerung einem Kollergang 5 zugeführt. In diesem laufen in bekannter Weise entlang einer um die vertikale Achse 6 verlaufenden Bahn eine oder mehrere um horizontale Achsen drehbar gelagerte Scheiben 7, 8. Durch die leichte zum Zentrum hin vorhandene Neigung des Bodens gelangen die Materialien nach innen und werden dort durch ein Sieb 9 ausgedrückt.

Ein weiteres Förderband 10 befördert das Lehm-Holz-Gemisch zur Walzenquetsche 11. Der Abstand zwischen den Mantelflächen der beiden rotierenden Walzen 12, 13, der den Durchgangsspalt 14 bildet, weist eine Größe im Bereich zwischen 0,7 und 2 mm, vorzugsweise zwischen 0,8 und 1,5 mm auf. In einem bevorzugten Ausführungsbeispiel der Erfindung ist dieser Spalt auf 1 mm eingestellt. Das Material wird von einem Schaber 15 von der Walze 13 (gegebenenfalls auch von der Walze 12) abgeschabt und gelangt auf ein weiteres Förderband 16. In der Folge wird das Material getrocknet, beispielsweise in einer Trockeneinrichtung 17, jedoch nicht gebrannt.

Die von der Dosieranlage 4 zugeführten Holzbestandteile weisen Dicken auf, die jedenfalls unterhalb von 5 mm, vorzugsweise unterhalb von 3 mm liegen. Es müssen jedoch Bestandteile vorhanden sein, deren Dicken größer als 1 mm sind, wobei diese Bestandteile mindestens 50 Volumsprozent des Gewichts der zugeführten Holzbestandteile ausmachen. Beispielsweise Gattersägen, wie sie in Sägereien zum Zuschnitt von Brettern aus Stämmen verwendet werden, liefern geeignetes Sägemehl bzw. geeignete Sägespäne. Die Späne haben hier Längen im Bereich von 5 bis 10 mm (wenn sie aus dem üblicherweise mehr oder weniger zusammengerollten Zustand auseinandergezogen werden) und Dicken von 1 bis 2 mm. Die Bestandteile des Sägemehls bzw. der Sägespäne, die eine Dicke aufweisen, die größer ist als der Durchgangsspalt 14 der Walzenquetsche 11, werden in dieser zu plättchenförmigen Holz-Lehm-Teilen verquetscht, wie weiter unten bei der Beschreibung des fertiggestellten Bodenschüttmaterials noch genauer ausgeführt wird.

Für die Herstellung des Bodenschüttmaterials ist weiters der Feuchtigkeitsgehalt des Ausgangsmaterials von Bedeutung. Das der Walzenquetsche 11 zugeführte Lehm-Holz-Gemisch weist einen Feuchtigkeitsgehalt von weniger als etwa 12% auf. Bei einem demgegenüber deutlich höheren Feuchtigkeitsgehalt würde dagegen die Quetschung mittels der Walzenquetsche nicht zur gewünschten Form des Materials führen.

Obwohl die Verwendung von Lehm und den genannten Holzbestandteilen alleine ein Bodenschüttmaterial bester Qualität ergibt, ist die Verwendung weiterer Füll-und Zusatzstoffe, die vor der Vermischung im Kollergang 5 zudosiert werden, bis zu einem Anteil von etwa 30 Volumsprozent denkbar und möglich. Als solche Füll- und Zusatzstoffe kommen beispielsweise mineralische, pflanzliche oder tierische Stoffe, wie Perlite, Kork oder Zellulose, in Frage.

Zur Herstellung des Bodenschüttmaterials kann eine herkömmliche Ziegelherstellungsanlage verwendet werden. Eine solche Ziegelherstellungsanlage weist Lehmaufbereitungseinrichtungen auf, die einen Kollergang 5 und eine Walzenquetsche 11 umfassen. Die Walzenquetsche 11 wird bei der herkömmlichen Ziegelherstellungsanlage zur Zerkleinerung der Bestandteile auf eine Dicke, die höchstens der Spaltbreite entspricht, verwendet. Auch Dosieranlagen 4 zur Zudosierung von Hilfsstoffen sind bei Ziegelherstellungsanlagen üblicherweise vorhanden.

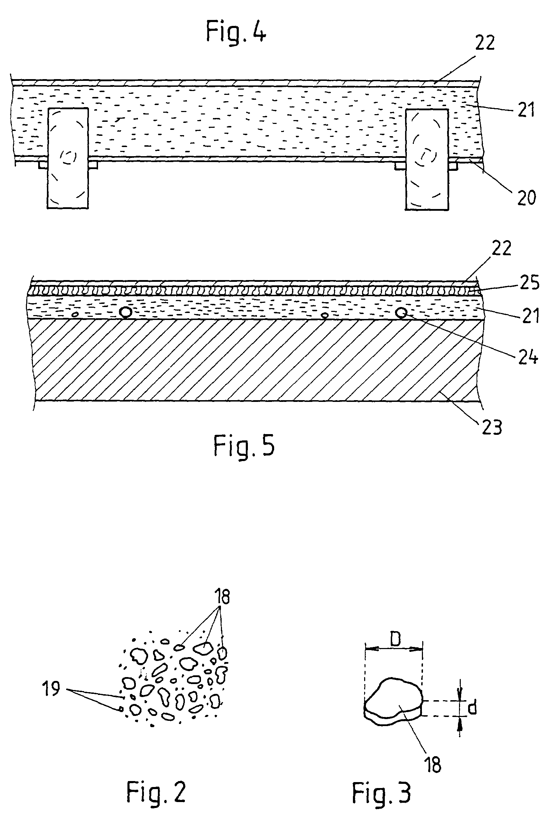

Das fertiggestellte Bodenschüttmaterial besteht aus losen, chemisch nicht miteinander verbundenen Teilchen, und liegt, wie in den Figuren 2 und 3 schematisch dargestellt, zumindest teilweise in der Form von plättchenförmigen Teilchen 18 vor. Diese enthalten Lehm und Holz in innig vermengter Form und weisen, in Draufsicht gesehen, unterschiedliche Formen und Abmessungen auf. Ihre Durchmesser D (an der größten Stelle gemessen) liegen hauptsächlich im Bereich zwischen 3 und 10 mm. Größere Bestandteile brechen meist bei der Abpakkung des Materials. Die Dicken d der plättchenförmigen Teilchen 18 sind hingegen relativ einheitlich und liegen, in Abhängigkeit von der Spaltbreite der Walzenquetsche 11, im Bereich zwischen 0,7 und 2 mm, vorzugsweise im Bereich zwischen 0,8 und 1 mm. Kleinere Teilchen 19 als solche mit mindestens 2 mm Durchmesser können nicht mehr als plättchenförmig bezeichnet werden und sind zum Teil auch staubförmig. Der Anteil, den die plättchenförmigen Teilchen 18 vom gesamten Material ausmachen, beträgt mindestens 30 Volumsprozent, vorzugsweise mindestens 50 Volumsprozent.

Aus dieser plättchenförmigen Gestalt der Teilchen 18 resultiert die Begehbarkeit der erfindungsgemäßen Bodenschüttung. Beim Aufbringen der Bodenschüttung auf den Untergrund ist die Orientierung der plättchenförmigen Teilchen zunächst unterschiedlich. Durch eine Vorverdichtung kommen sie jedoch im wesentlichen parallel zum Untergrund zu liegen. Dadurch erhält die Bodenschüttung eine für die Begehbarkeit der Bodenschüttung ausreichende Stabilität, d. h. das Material weicht beim Begehen nicht seitlich aus.

Unterschiedliche Bodenaufbauten sind unter Verwendung der erfindungsgemäßen Bodenschüttung denkbar und möglich. Figur 4 zeigt beispielsweise eine Holzbalkendecke, bei der auf einem Blindboden 20 die erfindungsgemäße Bodenschüttung 21 aufgebracht ist und eine Art "Trockenestrich" bildet. Auf der Bodenschüttung 21 sind Trockenbauplatten 22 schwimmend verlegt.

Bei dem in Figur 5 dargestellten Bodenaufbau ist die erfindungsgemäße Bodenschüttung 21 auf einer Betondecke 23 aufgebracht. In der Bodenschüttung 21 sind Installationen 24 eingebettet, schwimmend auf der Bodenschüttung 21 sind Weichfaserplatten 25 verlegt, welche Trockenbauplatten 22 tragen.

Vielfältige andere Arten von Bodenaufbauten sind unter Verwendung der erfindungsgemäßen Bodenschüttung denkbar und möglich. Die erfindungsgemäße Bodenschüttung ist dabei auch als Füllmaterial zum Ausfüllen von Hohlräumen einsetzbar, wobei keine Verdichtung des Materials erfolgt und die plättchenförmigen Teilchen 18 sich nicht parallel zum Untergrund ausrichten.

Die Schüttdichte liegt beispielsweise im Bereich zwischen 750 bis 850 kg/m³ und die Wärmeleitfähigkeit bei 0,2 Watt.

### Legende

zu den Hinweisziffern:
- 1: Lehmvorratsbehälter
- 2: Förderband
- 3: Vorrichtung
- 4: Dosieranlage
- 5: Kollergang
- 6: vertikale Achse
- 7: Scheibe
- 8: Scheibe
- 9: Sieb
- 10: Förderband
- 11: Walzenquetsche
- 12: Walze
- 13: Walze
- 14: Durchgangsspalt
- 15: Schaber
- 16: Förderband
- 17: Trockeneinrichtung
- 18: plättchenförmiges Teilchen
- 19: Teilchen
- 20: Blindboden
- 21: Bodenschüttung
- 22: Trockenbauplatte
- 23: Betondecke
- 24: Installation
- 25: Weichfaserplatte

## Patentansprüche

1. Bodenschüttmaterial, insbesondere zur Erstellung einer begehbaren Bodenschüttung, **dadurch gekennzeichnet, daß** das Bodenschüttmaterial aus einem Gemisch besteht, welches Lehm und/oder Ton in ungebrannter Form sowie pflanzliche Faserstoffe auf Holzbasis enthält und welches durch Verquetschen zumindest teilweise in der Form von plättchenförmigen Teilchen (18) vorliegt.

2. Bodenschüttmaterial nach Anspruch 1, **dadurch gekennzeichnet, daß** die plättchenförmigen Teilchen (18) Dicken im Bereich zwischen 0,7 mm und 2 mm, vorzugsweise im Bereich zwischen 0,7 mm und 1,5 mm aufweisen.

3. Bodenschüttmaterial nach Anspruch 1 oder Anspruch 2, **dadurch gekennzeichnet, daß** die plättchenförmigen Teilchen (18) Durchmesser aufweisen, die hauptsächlich im Bereich zwischen 2 mm und 10 mm liegen.

4. Bodenschüttmaterial nach einem der Ansprüche 1 bis 3, **dadurch gekennzeichnet, daß** die plättchenförmigen Teilchen (18) mindestens 30 Volumsprozent, vorzugsweise mindestens 60 Volumsprozent des Bodenschüttmaterials ausmachen.

5. Bodenschüttmaterial nach einem der Ansprüche 1 bis 4, **dadurch gekennzeichnet, daß** das Bodenschüttmaterial 40 bis 85 Volumsprozent, vorzugsweise 55 bis 75 Volumsprozent Lehm und/oder Ton und 15 bis 80 Volumsprozent, vorzugsweise 15 bis 60 Volumsprozent, nochmals vorzugsweise 25 bis 45 Volumsprozent pflanzliche Faserstoffe auf Holzbasis enthält.

6. Bodenschüttmaterial nach einem der Ansprüche 1 bis 5, **dadurch gekennzeichnet, daß** das Bodenschüttmaterial bis zu 30 Volumsprozent an Zusatz- und/oder Füllstoffen enthält, beispielsweise mineralische, pflanzliche oder tierische Stoffe, wie Perlite, Kork oder Zellulose.

7. Bodenschüttmaterial nach einem der Ansprüche 1 bis 5, **dadurch gekennzeichnet, daß** das Bodenschüttmaterial nur aus Lehm und/oder Ton und pflanzlichen Faserstoffen auf Holzbasis besteht.

8. Verfahren zur Herstellung eines Bodenschüttmaterials, insbesondere zur Erstellung einer begehbaren Bodenschüttung, nach einem der Ansprüche 1 bis 7, **dadurch gekennzeichnet, daß** Lehm und/oder Ton mit pflanzlichen Faserstoffen auf Holzbasis in Form von Sägemehl, Sägespänen od. dgl. vermischt wird und die Mischung durch eine Walzenquetsche (11) geführt wird.

9. Verfahren nach Anspruch 8, **dadurch gekennzeichnet, daß** die Walzenquetsche (11) einen Durchgangsspalt (14) mit einer Breite im Bereich zwischen 0,7 mm und 2 mm, vorzugsweise zwischen 0,8 mm und 1,5 mm aufweist.

10. Verfahren nach Anspruch 8 oder Anspruch 9, **dadurch gekennzeichnet, daß** die Vermischung in einem Kollergang (5) durchgeführt wird.

11. Verfahren nach einem der Ansprüche 8 bis 10, **dadurch gekennzeichnet, daß** das gequetschte Material von der oder den Walze(n) (12, 13) der Walzenquetsche (11) durch einen oder mehrere Schaber (15) heruntergeschabt wird.

12. Verfahren nach einem der Ansprüche 8 bis 11, **dadurch gekennzeichnet, daß** das Material nach der Quetschung getrocknet wird.

13. Verfahren nach einem der Ansprüche 8 bis 12, **dadurch gekennzeichnet, daß** der Lehm und/oder Ton vor der Zuführung der pflanzlichen Faserstoffe auf Holzbasis zerkleinert wird.

14. Verfahren nach einem der Ansprüche 8 bis 13, **dadurch gekennzeichnet, daß** die mit dem Lehm und/oder Ton zu vermischenden Holzbestandteile Dicken aufweisen, die unterhalb von 5 mm, vorzugsweise unterhalb von 3 mm liegen.

15. Verfahren nach einem der Ansprüche 8 bis 14, **dadurch gekennzeichnet, daß** die mit dem Lehm und/oder Ton zu vermischenden Holzbestandteile Dicken aufweisen, die zumindest bei einem Teil, der mindestens 50 Volumsprozent der gesamten Holzbestandteile ausmacht, größer als 1 mm sind.

16. Verfahren nach einem der Ansprüche 8 bis 15, **dadurch gekennzeichnet, daß** das Sägemehl bzw. die Sägespäne von einer Gattersäge stammen.

17. Verfahren nach einem der Ansprüche 8 bis 16, **dadurch gekennzeichnet, daß** eine solche Menge von Holzbestandteilen dosiert wird, daß 40 bis 85 Volumsprozent, vorzugsweise 55 bis 75 Volumsprozent Lehm und/oder Ton und 15 bis 80 Volumsprozent, vorzugsweise 15 bis 60 Volumsprozent, nochmals vorzugsweise 25 bis 40 Volumsprozent pflanzliche Faserstoffe auf Holzbasis vorliegen.

18. Verfahren nach einem der Ansprüche 8 bis 16, **dadurch gekennzeichnet, daß** Füll- oder Zusatzstoffe bis zu einer Menge von 30 Volumsprozent des Gesamtmaterials zugegeben werden.

19. Verfahren nach einem der Ansprüche 8 bis 18, **dadurch gekennzeichnet, daß** die der Walzenquetsche (11) zugeführte Mischung einen Feuchtigkeitsgehalt von weniger als etwa 12% aufweist.

20. Verwendung einer Ziegelherstellungsanlage zur Herstellung eines Bodenschüttmaterials nach einem der Ansprüche 1 bis 18.
